# EUROPÄISCHE PATENTANMELDUNG

(11) **EP 1 256 436 A1**
(43) Veröffentlichungstag der Anmeldung: **13.11.2002**
(21) Anmeldenummer: 02010080.6
(22) Anmeldetag: 06.05.2002
(51) Int. Cl.: B29C 49/32, B29C 49/56, B29C 49/04

(54) **Blasform-Schliesseinheit**

(30) Priorität: 11.05.2001 DE 10122943
(71) Anmelder: Bosch Rexroth AG, 97816 Lohr (DE)
(72) Erfinder: Dantlgraber, Jörg, 97816 Lohr a.M. (DE)
(74) Vertreter: Winter, Brandl, Fürniss, Hübner, Röss, Kaiser, Polte, Partnerschaft

(57) **Zusammenfassung**

Offenbart ist eine Blasform-Schließeinheit für eine Blasformmaschine, mit einer Schließeinrichtung (1) zum Auf- oder Zufahren eines in der Schließeinheit aufgenommenen Blaswerkzeuges (8,10) und einer Verfahreinrichtung, über die das Blaswerkzeug mit Bezug zu einem Schlauchkopf oder einem Kalibrierblasdorn der Blasformmaschine ausrichtbar ist. Die Ansteuerung der Schließeinrichtung und der Verfahreinrichtung erfolgt über einen gemeinsamen Antrieb, so daß der vorrichtingstechnische Aufwand minimal ist. Ebenfalls offenbart ist die Möglichkeit, die Verfahrbewegung der Schließeinheit durch Verschwenken anstelle einer Linearbewegung durchzuführen.

## Beschreibung

Die Erfindung betrifft eine Blasform-Schließeinheit für eine Blasformmaschine gemäß dem Oberbegriff des Patentanspruchs 1.

In der DE 694 20 909 T2 ist eine Blasformmaschine bekannt, bei der eine Blasform-Schließeinheit der gattungsgemäßen Form in einem Maschinengestell geführt ist. Oberhalb der Blasform-Schließeinheit sind ein Schlauchkopf und ein Kalibrierblasdorn angeordnet, zwischen denen die Blasform-Schließeinheit verfahrbar ist. Über den Schlauchkopf wird ein schlauchförmiger Vorformling extrodiert und in das geöffnete, in der Blasform-Schließeinheit aufgenommene Blaswerkzeug eingeführt. Nach dem Schließen des Werkzeuges und dem Abtrennen des Schlauches wird das Werkzeug verfahren und mit Bezug zum Kalibrierblasdorn ausgerichtet. Dieser taucht dann in einen vom Blaswerkzeug gebildeten Halsbutzen in das Innere des Vorformling ein. Durch Einblasen eines Gases in das Innere des Vorformlinges wird dieser durch den entstehenden Gasdruck an die Wandungen des Blaswerkzeuges angelegt und der Blaskörper ausgebildet. Nach dem Entformen des Blaskörpers wird das geöffnete Blaswerkzeug zur Aufnahme des Vorformlinges (Schlauch) zurück zum Schlauchkopf bewegt.

Die Verfahrbewegungen des Schlauchkopfes und des Kalibrierblasdornes sowie der Blasform-Schließeinheit werden bei moderneren Maschinenkonzepten über elektrische Antriebe, beispielsweise über mittels Servomotoren angetriebene Spindeln gesteuert. Bei der bekannten Lösung ist jeweils ein eigener Antrieb vorgesehen, um die Verfahrbewegungen des Schlauchkopfes und des Kalibrierblasdornes sowie die Schließ- und Verfahrbewegung der Blasform-Schließeinheit zu steuern, so daß ein erheblicher vorrichtungstechnischer Aufwand erforderlich ist.

Dem gegenüber liegt der Erfindung die Aufgabe zugrunde, eine Blasform-Schließeinheit für eine Blasformmaschine zu schaffen, die einen gegenüber der vorbeschriebenen Lösung einfacheren Aufbau hat.

Diese Aufgabe wird durch eine Blasform-Schließeinheit mit den Merkmalen des Patentanspruchs 1 gelöst.

Erfindungsgemäß hat die Blasform-Schließeinheit eine Schließeinrichtung zum Öffnen und Schließen des in der Blasform-Schließeinheit aufgenommenen Werkzeuges sowie eine Verfahreinrichtung, über die das Blaswerkzeug mit Bezug zu dem den Vorformling herstellenden Aggregat (Schlauchkopf) und zum Kalibrierblasdorn ausrichtbar ist. Für die Ansteuerung der Schließeinrichtung und der Verfahreinrichtung ist ein gemeinsamer Antrieb vorgesehen, der wahlweise mit einem der beiden Baugruppen in Wirkverbindung bringbar ist. Dies kann beispielsweise dadurch erfolgen, daß der Antrieb mit zwei Kupplungen versehen ist, wobei eine Kupplung der Schließeinrichtung und die andere Kupplung der Verfahreinrichtung zugeordnet ist. Die Kupplungen werden über die zentrale Maschinensteuerung angesteuert, so daß die Verfahrbewegung des Werkzeuges mit minimalem vorrichtungstechnischen Aufwand gesteuert wird.

Bei einem besonders bevorzugtem Ausführungsbeispiel hat die Schließeinheit zum Öffnen und Schließen der Blasform eine Spindel mit zwei Spindelabschnitten, die mit gegenläufigen Steigungen versehen sind. Die beiden Spindelabschnitte stehen mit jeweils einer Blaswerkzeughälfte in Eingriff, so daß durch Drehung der Spindel die Öffnungs- oder Schließbewegung gesteuert werden kann.

Die Spindel wird vorzugsweise in einem Schwenkrahmen gelagert, in dem auch der gemeinsame Antrieb und die Verfahreinrichtung aufgenommen sind.

Die Betätigung des Schwenkrahmens erfolgt vorzugsweise über zwei an den Blaswerkzeughälften angelenkte Gelenkstangen, die über ein gemeinsames Schwenkgelenk am Gestell der Blasformmaschine gelagert sind, so daß praktisch die gesamte Blasform-Schließeinheit um das Schwenkgelenk verschwenkbar ist, wobei das Blasformwerkzeug in den Endpositionen zum Schlauchkopf oder zum Kalibrierblasdorn ausgerichtet ist.

Bei einem besonders bevorzugtem Ausführungsbeispiel hat die Verfahreinrichtung eine im Schwenkrahmen gelagerte Schwenkspindel, die mit einer Mutter in Eingriff steht. Diese ist über eine Schwenkstange mit einem weiteren, am Gestell der Blasformmaschine befestigten Gelenk verbunden. Durch Ansteuerung der Schwenkspindel und die daraus resultierende Axialverschiebung der Mutter wird dann der Schwenkrahmen um das Schwenkgelenk herum verschwenkt.

Bei einer kompakten Variante der Erfindung sind die Schwenkspindel zum Verschwenken des Schwenkrahmens und die Spindel zum Öffnen und Schließen des Blaswerkzeuges im Parallelabstand im Schwenkrahmen gelagert und vorzugsweise über einen Riementrieb mit dem gemeinsamen Antrieb verbunden. Selbstverständlich können anstelle des Riementriebs auch andere geeignete Getriebe zwischen den Antrieb und die zugeordnete Spindel geschaltet werden.

Die Anmelderin behält sich vor, auch die Verfahrbewegung durch Verschwenken auf einen eigenen unabhängigen Anspruch zu richten.

Sonstige vorteilhafte Weiterbildungen der Erfindung sind Gegenstand der weiteren Unteransprüche.

Die Erfindung zeichnet sich durch einen äußerst kompakten Aufbau aus, wobei die Verschwenkung mittels der Schwenkspindel und die geringe Masse der Blasform-Schließeinheit sehr hohe Verfahrgeschwindigkeiten erlauben, so daß die Blasformmaschine mit hoher Taktzahl betreibbar ist.

Im folgenden wird ein bevorzugtes Ausführungsbeispiel der Erfindung anhand schematischer Zeichnungen näher erläutert. Es zeigen:
Figur 1 eine schematische Darstellung einer erfindungsgemäßen Blasform-Schließeinheit einer Blasformmaschine und
Figur 2 die Blasform-Schließeinheit in einer Schwenkposition.

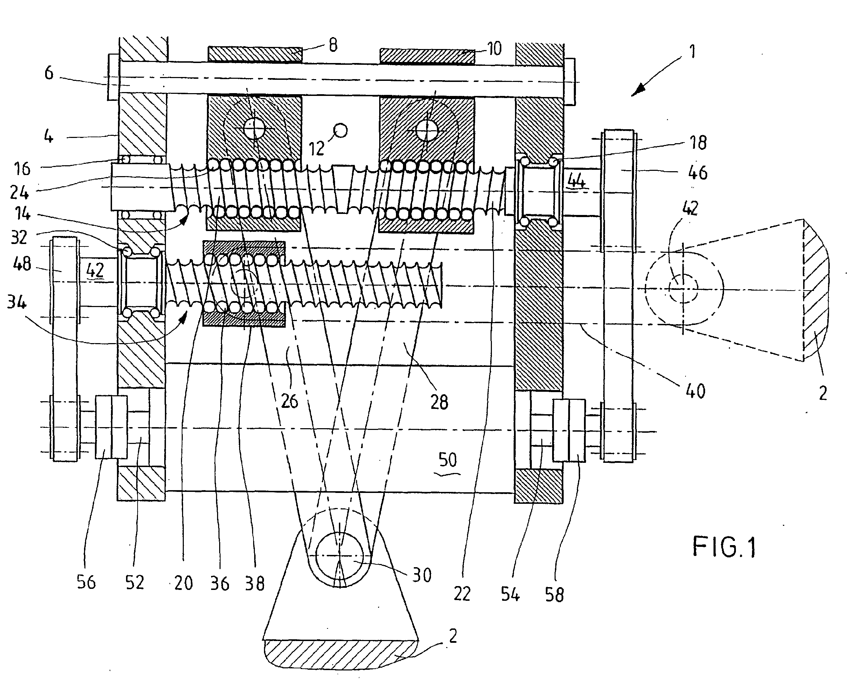

Figur 1 zeigt in stark vereinfachter Form einen Schnitt durch eine Blasform-Schließeinheit 1, die in einem Gestell 2 einer Blasformmaschine angeordnet ist. Wie eingangs beschrieben, hat die Blasformmaschine einen oberhalb der Schließeinheit angeordneten Schlauchkopf und einen Kalibrierblasdorn, zwischen denen die Schließeinheit verfahrbar ist.

Bei dem dargestellten Ausführungsbeispiel hat die Schließeinheit 1 einen Schwenkrahmen 4 mit einem oder mehreren Führungsholmen 6, entlang denen zwei Aufspannplatten 8, 10 geführt sind, auf denen die Werkzeughälften eines Blaswerkzeuges gespannt sind. Beim geöffneten Werkzeug läßt sich der vom Schlauchkopf extrodierte Vorformling entlang der in Figur 1 mit 12 bezeichneten Achse zwischen die beabstandeten Werkzeughälften 8, 10 einführen, so daß der Vorformling durch Schließen des Werkzeuges vom Schlauchkopf abgetrennt wird.

Im Schwenkrahmen 4 ist eine Spindel 14 mittels Wälzlagern 16, 18 gelagert, die sich im Parallelabstand zu den Holmen 6 erstreckt. Gemäß Figur 1 hat die Spindel 14 zwei Spindelabschnitte 20, 22 mit gegenläufiger Steigung, auf denen jeweils eine der Aufspannplatten 8 bzw. 10 geführt ist. Bei dem dargestellten Ausführungsbeispiel stehen die Aufspannplatten 8, 10 über Kugelumlaufbuchsen 24 in Eingriff mit der Spindel 14.

An den beiden Aufspannplatten 8, 10 sind zwei Gelenkstangen 26, 28 angelenkt, über die der Schwenkrahmen 4 an einen am Gestell 2 befestigten Schwenkgelenk 30 abgestützt ist. Die beiden Gelenkstangen, 26, 28 erstrecken sich etwa v-förmig zu dem Schwenkgelenk 30. In dem Schwenkrahmen 4 ist im Parallelabstand zur Spindel 14 eine Schwenkspindel 34 über eine Lagerung 32 gelagert, auf der über eine weitere Kugelumlaufbuchse 36 eine Mutter 38 geführt ist. An dieser ist eine Schwenkstange 40 angelenkt, die über ein Gelenk 42 mit dem Gestell 2 verbunden ist.

In der Figur 1 dargestellten Grundposition erstreckt sich die Schwenkstange 40 etwa in Verlängerung zur Schwenkspindel 34, während die beiden Gelenkstangen 26, 28 etwa in Querrichtung verlaufen. Zwei einander schräg gegenüberliegende Endabschnitte 42, 44 der Schwenkspindel 34 bzw. der Spindel 14 erstrecken sich aus dem Schwenkrahmen 4 hinaus und sind jeweils über einen Zahnriementrieb 48 bzw. 46 mit einem elektrischen Antrieb 50 verbunden, der im Schwenkrahmen 4 aufgenommen ist. Bei dem dargestellten Ausführungsbeispiel hat der elektrische Antrieb 50 zwei koaxial zueinander angeordnete Antriebswellen 52, 54, die über Kupplungen 56, 58 mit dem Riementrieb 48 bzw. 46 verbindbar sind. Die Kupplungen 56, 58 werden über die zentrale Maschinensteuerung angesteuert, so daß der Antrieb 50 wahlweise zum Antreiben der Spindel 14 und / oder der Schwenkspindel 34 verwendbar ist.

In der in Figur 1 dargestellten Schwenkposition ist die Schließeinheit 1 derart ausgerichtet, daß die Achse 12 des Vorformlinges mittig zwischen den beiden geöffneten Werkzeughälften 8, 10 verläuft. Nach dem Extrudieren des entlang der Achse 12 verlaufenden Vorformlinges wird das Blaswerkzeug geschlossen und der Vorformling vom Schlauchkopf abgetrennt und das untere Ende des Vorformlinges durch Quetschkanten des Werkzeuges verschlossen und verschweißt. Die Schließbewegung des Werkzeuges erfolgt durch Ansteuerung des Antriebs 50 und Einrücken der Kupplung 58, so daß die Spindel 14 über den Riementrieb 48 angetrieben und die beiden Werkzeughälften 8, 10 in Schließrichtung verfahren werden.

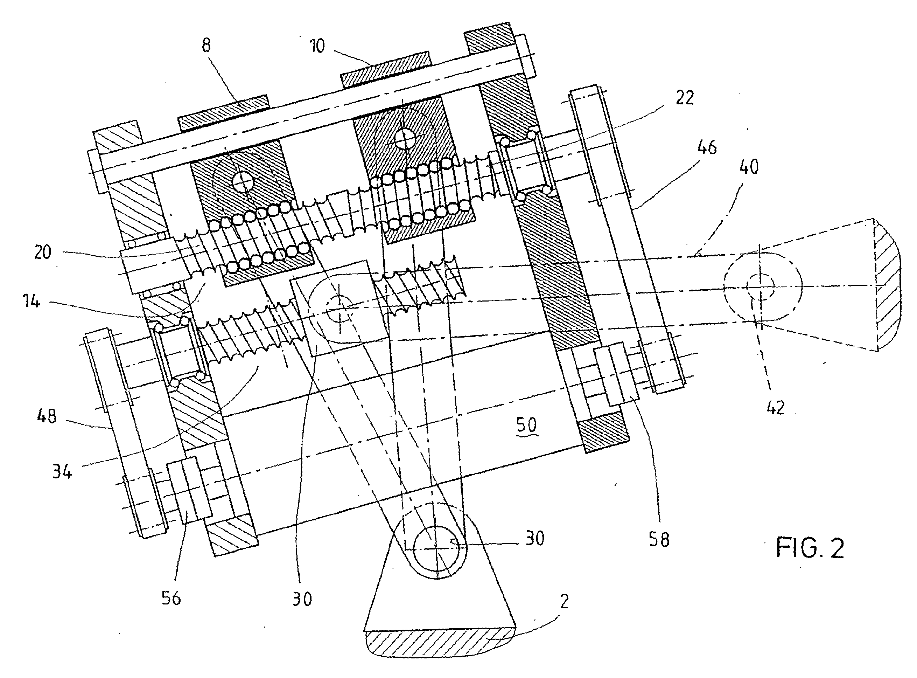

Anschließend wird die Kupplung 58 geöffnet und die beiden Aufspannplatten 8, 10 durch eine nicht gezeigte Vorrichtung miteinander verriegelt um ein Auseinandertreiben des Werkzeuges während des Blasformens zu verhindern. Gleichzeitig wird über die Maschinensteuerung die Kupplung 56 geschlossen, so daß die Schwenkspindel 34 über dem Antrieb 50 und dem Riementrieb 48 gedreht wird. Durch die Drehung der Schwenkspindel 34 wird die Mutter 38 in der Darstellung gemäß Figur 1 nach rechts in die in Figur 2 dargestellte Position verschoben. Da die Mutter 38 über die Schwenkstange 40 am Gestell 2 der Blasformmaschine abgestützt ist, wird diese Axialbewegung der Mutter 38 in eine Schwenkbewegung des gesamten Schwenkrahmens 4 um das Schwenkgelenk 30 umgesetzt, wobei diese Schwenkbewegung über die beiden am Schwenkgelenk 30 angelenkten Schwenkstangen 26, 28 geführt ist.

Nach Erreichen der Endposition wird die Kupplung 56 geöffnet, der Kalibrierblasdorn taucht in das Innere des Vorformlings ein und der Blaskörper wird durch den Gasdruck im Inneren des Vorformlings ausgebildet.

Nach dem Blasformen wird die Kupplung 58 geschlossen und der Antrieb 50 so angesteuert, daß die beiden Werkzeughälften über die Spindel 14 auseinanderbewegt werden und der Blaskörper aus dem Werkzeug entformt werden kann. Im nächsten Fertigungsschritt wird die Kupplung 56 geschlossen und die Mutter in der Darstellung gemäß Figur 2 nach links bewegt, so daß der Schwenkrahmen 4 in seine Grundposition zurückschwenkt - der parallel zum Blasformen extrudierte Vorformling wird durch Absenken des Schlauchkopfes wieder zwischen die beiden Werkzeughälften 8, 10 gebracht - der Zyklus beginnt von neuem.

Selbstverständlich können anstelle der Riementriebe 46, 48 auch andere geeignete Getriebe verwendet werden, um die Drehzahl des Motors 50 auf die gewünschte Spindeldrehzahl zu übersetzen.

Zur Verbesserung der Abstützung des Schwenkrahmen können zusätzliche, nicht dargestellte Führungselemente vorgesehen werden, über die der Schwenkrahmen 4 während der Schwenkbewegung auf dem Gestell 2 abgestützt ist.

Selbstverständlich kann das Blasformen auch in der in Fig. 1 dargestellten Schwenkposition und das Zuführen des Vorformlings in der in Fig. 2 dargestellten Schwenkposition erfolgen.

Offenbart ist eine Blasform-Schließeinheit für eine Blasformmaschine, mit einer Schließeinrichtung zum Aufoder Zufahren eines in der Schließeinheit aufgenommenen Blaswerkzeuges und einer Verfahreinrichtung, über die das Blaswerkzeug mit Bezug zu einem Schlauchkopf oder einem Kalibrierblasdorn der Blasformmaschine ausrichtbar ist. Die Ansteuerung der Schließeinrichtung und der Verfahreinrichtung erfolgt über einen gemeinsamen Antrieb, so daß der vorrichtungstechnische Aufwand minimal ist. Ebenfalls offenbart ist die Möglichkeit, die Verfahrbewegung der Schließeinheit durch Verschwenken anstelle einer Linearbewegung durchzuführen.

## Patentansprüche

1. Ventilanordnung zum lastdruckunabhängigen Ansteuern von Verbrauchern (4), mit einem die Druckmittelströmung zu oder vom Verbraucher regelnden Hauptventil (10), wobei in einem Druckmittelströmungspfad zwischen einem Arbeitsanschluß (A) und dem Hauptventil (10) ein Sperrventil (18) angeordnet ist, das eine Druckmittelströmung zum Arbeitsanschluß (A) ermöglicht und das in Gegenrichtung mittels eines Pilotventils (20) aufsteuerbar ist, **dadurch gekennzeichnet, daß** ein Pilotkolben (24) des Pilotventils (20) durch Verschieben eines Hauptschiebers (12) des Hauptventils (10) von einem Vorsteuersitz (138) abhebbar ist.

2. Ventilanordnung nach Patentanspruch 1, wobei am Hauptschieber (12) ein Stößel (22) ausgebildet ist, der in Anlage an den Pilotkolben (24) bringbar ist.

3. Ventilanordnung nach Patentanspruch 2, wobei der Stößel (22) an einem in eine Stirnfläche des Hauptschiebers (12) eingesetzten Einsatzteil (144) ausgebildet ist.

4. Ventilanordnung nach einem der vorhergehenden Patentansprüche, wobei die Ventilachse des Pilotventils (20) im Parallelabstand zur Achse des Sperrventils (18) und etwa koaxial zur Achse des Hauptventils (10) angeordnet ist.

5. Ventilanordnung nach einem der vorhergehenden Patentansprüche, wobei das Pilotventil (20) und das Sperrventil (18) in einem gemeinsamen Ventilgehäuse (38) angeordnet sind, das an eine Stirnfläche einer das Hauptventil (10) aufnehmenden Ventilscheibe (36) angesetzt ist.

6. Ventilanordnung nach Patentanspruch 5, wobei am Ventilgehäuse (38) zumindest ein Arbeitsanschluß (A) ausgebildet ist.

7. Ventilanordnung nach einem der vorhergehenden Patentansprüche, wobei ein Federraum (105) des Sperrventils (18) über das Pilotventil (20) mit einem Niederdruckanschluß, vorzugsweise einem den den Hauptschieber (12) in Richtung weg vom Pilotventil (20) beaufschlagenden Steuerdruck führenden Steueranschluß (a) verbindbar ist.

8. Ventilanordnung nach Patentanspruch 7, wobei der Pilotkolben (24) Feinsteuerkerben (139) zum allmählichen Aufsteuern der Verbindung zum Niederdruckanschluß (a) hat.

9. Ventilanordnung nach einem der vorhergehenden Patentansprüche, wobei dem Sperrventil (18) ein Druck-/Nachsaugventl (28) nachgeschaltet ist.

10. Ventilanordnung nach Patentanspruch 9, wobei ein Anschluß des Druck-/Nachsaugventils (28) über eine Tankbohrung (112) mit einem Tankanschluß (T) verbunden ist, wobei die Tankbohrung (112) eine Gehäusepatrone (92) des Sperrventils (18) als Ringraum (116) umgreift.

11. Ventilanordnung nach einem der vorhergehenden Patentansprüche, wobei dem Hauptschieber (12) zumindest eine Rückstellfedereinrichtung (14) zugeordnet ist, die nach einem vorbestimmten Anfangshub (S) des Hauptschiebers (12) entgegen der zum Betätigen des Pilotkolbens (24) erforderlichen Stellkraft wirkt.

12. Ventilanordnung nach Patentanspruch 11, wobei die Rückstellfedereinrichtung (14) eine Rückstellfeder (68) hat, die an einem Federteller (76) abgestützt ist, der nach dem Anfangshub (S) auf eine Anlageschulter (80) aufläuft.

13. Ventilanordnung nach Patentanspruch 5 und 10, wobei die Gehäusepatrone (92) in einen Arbeitskanal (26) der Ventilscheibe (36) einmündet.

14. Ventilanordnung nach Patentanspruch 5, wobei mittels des Hauptventils (10) eine veränderliche Zumeßblende (82) ausgebildet ist, der eine in der Ventilscheibe (36) aufgenommene Druckwaage (16) nachgeschaltet ist.
